# EUROPEAN PATENT APPLICATION

(11) **EP 4 279 947 A1**
(43) Date of publication of application: **22.11.2023**
(21) Application number: 23173387.4
(22) Date of filing: 15.05.2023
(51) Int. Cl.: G01S 7/41, G01S 13/931, G01S 7/48, G01S 17/931

(54) **DRIVABLE AREA DETECTION METHOD, COMPUTER DEVICE, STORAGE MEDIUM, AND VEHICLE**

(30) Priority: 16.05.2022 CN 202210530347
(71) Applicant: Anhui NIO Autonomous Driving Technology Co., Ltd., Hefei, Anhui 230601 (CN)
(72) Inventor: REN, Guanghu, Jiading Shanghai (CN); QIN, Huan, Jiading Shanghai (CN); HE, Xindong, Jiading Shanghai (CN); XIONG, Qi, Jiading Shanghai (CN); PENG, Chao, Jiading Shanghai (CN)
(74) Representative: Vossius & Partner Patentanwälte Rechtsanwälte mbB

(57) **Abstract**

The disclosure relates to the field of vehicle technologies, and specifically provides a drivable area detection method, a computer device, a storage medium, and a vehicle, to solve a problem of accurately determining a drivable area. For this purpose, the method of the disclosure includes: obtaining three-dimensional point clouds of a driving environment of a vehicle; estimating a ground height of the current environment based on the three-dimensional point clouds of the current environment by using a ground height estimation model based on a convolutional neural network; determining, based on the ground height, non-ground point clouds not belonging to the ground in the three-dimensional point clouds; performing obstacle detection on the non-ground point clouds to obtain one or more obstacles; and determining a drivable area in the driving environment of the vehicle based on a position of an obstacle. According to the above method, the non-ground point clouds can be quickly and accurately selected from a large number of three-dimensional point clouds, thereby improving the efficiency and accuracy of determining the drivable area by using the non-ground point clouds.

## Description

### Technical Field

The disclosure relates to the field of vehicle technologies, and specifically provides a drivable area detection method, a computer device, a storage medium, and a vehicle.

### Background Art

At present, conventional vehicle drivable area detection methods mainly include: a detection method using a depth camera and a detection method using a three-dimensional point cloud. The detection method using a depth camera is mainly to detect a distance between the vehicle and a surrounding obstacle by using the depth camera installed on the vehicle, and determine a drivable area of the vehicle based on the detected distance. This method is limited by the depth perception ability of the depth camera, and it is very difficult to detect an accurate drivable area. The detection method using a three-dimensional point cloud is mainly to perform obstacle detection on three-dimensional point clouds of a driving environment of the vehicle, to determine whether there is an obstacle in the driving environment and a distance between an obstacle and the vehicle, and determine a drivable area of the vehicle based on the distance. In the detection method using a three-dimensional point cloud, to ensure the accuracy of obstacle detection, it is necessary to first filter out a ground point cloud belonging to the ground in the three-dimensional point cloud, and then perform obstacle detection on a remaining three-dimensional point cloud. Currently, a conventional ground point cloud filtering method is mainly to first manually set a filtering rule, and then determine, one by one according to the set filtering rule, three-dimensional point clouds that are ground point clouds and then filter out these three-dimensional point clouds. Since the number of three-dimensional point clouds is usually very large, this method needs to consume more time to filter out ground point clouds. In addition, this method completely relies on the set filtering rule, and cannot filter out a ground point cloud that is not covered by the filtering rule, and the generalization ability is poor.

Accordingly, a new technical solution is required in the field to solve the problem described above.

### Summary of the Invention

To overcome the above defects, the disclosure is proposed to provide a drivable area detection method, a computer device, a storage medium, and a vehicle, to solve or at least partly solve the technical problem of how to quickly and accurately determine non-ground point clouds not belonging to the ground in three-dimensional point clouds, and then how to accurately determine a drivable area based on the non-ground point clouds.

According to a first aspect, the disclosure provides a drivable area detection method, including:
obtaining three-dimensional point clouds of a driving environment of a vehicle;
estimating a ground height of the current environment based on the three-dimensional point clouds of the current environment by using a ground height estimation model based on a convolutional neural network;
determining, based on the ground height, non-ground point clouds not belonging to the ground in the three-dimensional point clouds;
performing obstacle detection on the non-ground point clouds to obtain one or more obstacles; and
determining a drivable area in the driving environment of the vehicle based on the position of the obstacles,
where the estimating a ground height of the current environment based on the three-dimensional point clouds of the current environment by using a ground height estimation model based on a convolutional neural network comprises at least the following steps:
   griding the point clouds space of the three-dimensional point clouds by using the ground height estimation model, to form multiple three-dimensional point cloud grids, extracting three-dimensional convolution features of multiple downsampling scales and two-dimensional convolution features of multiple downsampling scales from three-dimensional point clouds in each of the point cloud grids, performing feature fusion on the three-dimensional convolution features and the two-dimensional convolution features to obtain point cloud grid features, and estimating, based on point cloud grid features of each of the point cloud grids, a ground height of a ground area in each of the point cloud grids.

In a technical solution of the drivable area detection method, the step of "extracting three-dimensional convolution features of multiple downsampling scales and two-dimensional convolution features of multiple downsampling scales from a three-dimensional point cloud in each of the point cloud grids" specifically includes:
performing a convolution operation on the three-dimensional point cloud in each of the point cloud grids by using three-dimensional convolutions of multiple downsampling scales, to obtain the three-dimensional convolution features of the multiple downsampling scales of each of the point cloud grids; and
converting the three-dimensional convolution features into initial two-dimensional convolution features, and performing a convolution operation on each of the initial two-dimensional convolution features by using two-dimensional convolutions of multiple downsampling scales, to obtain the final two-dimensional convolution features of the multiple downsampling scales of each of the point cloud grids.

In a technical solution of the drivable area detection method, the step of "performing feature fusion on the three-dimensional convolution features and the two-dimensional convolution features to obtain point cloud grid features" specifically includes:
converting all the three-dimensional convolution features of each downsampling scale into three-dimensional convolution features of a preset sampling scale, performing a convolution operation on each of the three-dimensional convolution features of the preset sampling scale by using a convolution kernel with a size of 1 1 1, performing addition and densification processing on three-dimensional convolution features resulting from the convolution operation, to form new three-dimensional convolution features, and converting the new three-dimensional convolution features into first two-dimensional convolution features;
converting all the two-dimensional convolution features of each downsampling scale into two-dimensional convolution features of the preset sampling scale, performing a convolution operation on each of the two-dimensional convolution features of the preset sampling scale by using a convolution kernel with a size of 1×1, and performing addition and densification processing on two-dimensional convolution features resulting from the convolution operation, to form second two-dimensional convolution features; and
performing a convolution operation on the first two-dimensional convolution features and the second two-dimensional convolution features by using a convolution kernel with a size of 1×1, and adding first two-dimensional convolution features and second two-dimensional convolution features resulting from the convolution operation, to obtain the point cloud grid features.

In a technical solution of the drivable area detection method, the method further includes: performing model training on the ground height estimation model in the following manner, so as to estimate the ground height of the current environment by using the trained ground height estimation model:
inputting three-dimensional point cloud training samples into the ground height estimation model, to obtain training sample point cloud grid features extracted from the three-dimensional point cloud training samples by the ground height estimation model; and
performing, based on the training sample point cloud grid features, model training on each of the ground height estimation model and a preset model for point cloud processing based on the ground height, and stopping model training when both the ground height estimation model and the preset model for point cloud processing based on the ground height meet a convergence condition.

In a technical solution of the drivable area detection method, the preset model for point cloud processing based on the ground height includes at least a ground point cloud segmentation model and/or an object detection model for object detection on a three-dimensional point cloud, and the method further includes: performing model training on the ground height estimation model based on the training sample point cloud grid features in the following steps:
performing model training on the ground height estimation model based on the training sample point cloud grid features by using a quadratic loss function, a smooth loss function, and a height consistency loss function,
wherein the quadratic loss function is a loss function that uses, as a loss value, a Euclidean distance between a first ground height annotation value of a three-dimensional point cloud training sample and an estimated ground height value outputted by the ground height estimation model; the first ground height annotation value is a ground height annotation value in a sample label used for model training performed on the ground height estimation model by using three-dimensional point cloud training samples;
the smooth loss function is a loss function that uses, as a loss value, a difference between estimated ground height values that are of adjacent three-dimensional point cloud training samples and that are outputted by the ground height estimation model;
the height consistency loss function is a loss function that uses, as a loss value, a Manhattan distance between a second ground height annotation value of a three-dimensional point cloud training sample and an estimated ground height value outputted by the ground height estimation model; and the second ground height annotation value is a ground height annotation value in a sample label used for model training performed on the ground point cloud segmentation model by using three-dimensional point cloud training samples.

In a technical solution of the drivable area detection method, the step of "determining, based on the ground height, non-ground point clouds not belonging to the ground in the three-dimensional point clouds" specifically includes:
determining a ground height of a ground area in a point cloud grid to which a current three-dimensional point cloud belongs;
adding a preset compensation amount to the ground height to form a new ground height;
determining whether a point cloud height of the current three-dimensional point cloud is less than the new ground height; and
if the point cloud height of the current three-dimensional point cloud is less than the new ground height, determining the current three-dimensional point cloud as a ground point cloud belonging to the ground; or
if the point cloud height of the current three-dimensional point cloud is not less than the new ground height, determining the current three-dimensional point cloud as a non-ground point cloud that does not belong to the ground.

In a technical solution of the drivable area detection method, the step of "determining a drivable area in the driving environment of the vehicle based on the position of the obstacles" specifically includes:
establishing a polar coordinate system corresponding to a three-dimensional coordinate system of the three-dimensional point cloud, generating a polar coordinate grid map based on a preset number of fan-shaped grids, and projecting the three-dimensional point cloud to the polar coordinate grid map;
determining a projection position of each obstacle based on a projection position, on the polar coordinate grid map, of a three-dimensional point cloud corresponding to the obstacle;
calculating a distance between the vehicle and a nearest obstacle in each fan-shaped grid; and
determining, based on the distance, the drivable area in the driving environment of the vehicle.

According to a second aspect, a computer device is provided. The computer device includes at least one processor and a storage apparatus configured to store multiple program codes, where the program codes are adapted to be loaded and executed by the at least one processor to execute the foregoing drivable area detection method in any one of the technical solutions of the foregoing drivable area detection method.

According to a third aspect, a non-transitory computer-readable storage medium having a plurality of program codes stored thereon that, when executed by at least one processor, cause the at least one processor to execute the foregoing drivable area detection method in any one of the technical solutions of the foregoing drivable area detection method.

According to a fourth aspect, a vehicle is provided, and the vehicle includes the computer device described in the above technical solution.

The above one or more technical solutions of the disclosure have at least one or more of the following beneficial effects:
In implementing the technical solution of the disclosure, the three-dimensional point cloud of the driving environment of the vehicle may be obtained, and the ground height of the current environment may be estimated based on the three-dimensional point clouds of the current environment by using the ground height estimation model based on the convolutional neural network. The non-ground point clouds not belonging to the ground in the three-dimensional point clouds are determined based on the ground height, one or more obstacles are obtained by performing obstacle detection on the non-ground point clouds, and finally the drivable area in the driving environment of the vehicle is determined based on the position of the obstacles. The estimating a ground height of the current environment based on the three-dimensional point clouds of the current environment by using a ground height estimation model based on a convolutional neural network includes at least the following steps: griding the point clouds space of the three-dimensional point clouds by using the ground height estimation model, to form multiple three-dimensional point cloud grids, extracting three-dimensional convolution features of multiple downsampling scales and two-dimensional convolution features of multiple downsampling scales from a three-dimensional point cloud in each of the point cloud grids, performing feature fusion on the three-dimensional convolution features and the two-dimensional convolution features to obtain point cloud grid features, and estimating, based on point cloud grid features of each of the point cloud grids, a ground height of a ground area in each of the point cloud grids.

The ground height determined based on the ground height estimation model may be used to quickly distinguish ground point clouds and non-ground point clouds from a large number of three-dimensional point clouds, thus overcoming the prior-art problem of inefficiency when three-dimensional points that are ground point clouds are determined one by one based on the set filtering rule. In addition, three-dimensional convolution features and two-dimensional convolution features of multiple downsampling scales are extracted from the three-dimensional point cloud and feature fusion is performed to form point cloud grid features, and then the ground height is estimated based on the point cloud grid features. Therefore, this can be applied to different geomorphological environments, and in each type of geomorphological environment, effective ground features can be extracted by extracting features of multiple downsampling scales. In this way, the ground height can be accurately estimated, thus overcoming the prior-art problem that determining a ground point cloud based on a manually set filtering rule completely depends on the set filtering rule, and the ground point cloud that is not covered by the filtering rule cannot be determined, and the generalization ability is poor.

Furthermore, in implementing some technical solutions of the disclosure, to obtain accurate point cloud grid features to further improve the accuracy of determining ground point clouds and non-ground point clouds, in training the ground height estimation model, the three-dimensional point cloud training samples may be inputted into the ground height estimation model, to obtain point cloud grid features extracted from the three-dimensional point cloud training samples by the ground height estimation model, model training is performed, based on the point cloud grid features, on each of the ground height estimation model and the preset model for point cloud processing based on the ground height (referred to as a "point cloud processing model" for short below), and model training is stopped when both the ground height estimation model and the point cloud processing model meet the convergence condition.

The model training on the ground height estimation model can optimize feature extraction parameters of the ground height estimation model, and the model training on the point cloud processing model can also optimize the feature extraction parameters of the ground height estimation model. Finally, through the collaborative training on the ground height estimation model and the point cloud processing model, the feature extraction parameters of the ground height estimation model can be better optimized, thereby improving the accuracy of extracting point cloud grid features by the ground height estimation model, obtaining accurate point cloud grid features, and further improving the accuracy of determining ground point clouds and non-ground point clouds.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the stages:
FIG. 1 is a schematic diagram of a polar coordinate grid map according to an embodiment of the disclosure;
FIG. 2 is a schematic flowchart of main steps of a drivable area detection method according to an embodiment of the disclosure;
FIG. 3 is a schematic flowchart of main steps of a method for estimating a ground height of a current environment based on a three-dimensional point cloud of the current environment by using a ground height estimation model based on a convolutional neural network according to an embodiment of the disclosure; and
FIG. 4 is a schematic flowchart of main steps of a method for determining, based on a position of an obstacle, a drivable area in a driving environment of a vehicle according to an embodiment of the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, "processor" may include hardware, software or a combination of both. The processor may be a central processing unit, a microprocessor, a graphics processing unit, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "alan" and "this" in the singular form may also include the plural form.

Some terms in the disclosure are explained herein first.

A polar coordinate (polar coordinates) system refers to a coordinate system including a pole O, a polar axis Ox, and a polar radius in a plane. The polar axis Ox is a ray drawn from the pole O, and the polar radius refers to a distance from a point P to the pole O in the plane. The point P may be expressed as P (ρ, θ) , ρ represents a polar radius of the point P, θ indicates a polar angle of the point P, and the polar angle is an angle formed in a counterclockwise direction from the polar axis Ox to the line segment OP. In the embodiments of the disclosure, the pole O of the polar coordinate system and the origin of a three-dimensional coordinate system of a three-dimensional point cloud may be a same point, and this point may be a point on a vehicle.

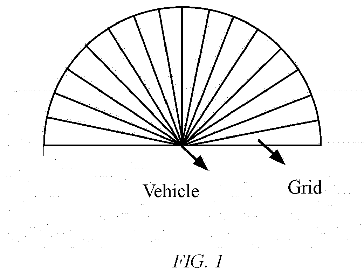

The polar coordinate grid map refers to a polar coordinate representation map formed after grid division on a plane with a specific polar angle range in the polar coordinate system. Through grid division, this plane may be divided into multiple grids. As shown in FIG. 1, in an embodiment of the disclosure, a grid division method is to divide a plane into multiple fan-shaped grids in the counterclockwise direction from the polar axis Ox starting from the pole O, and each grid corresponds to a polar angle range. For example, if the polar angle range of the plane is 120° and the number of grids formed by division is 192, corresponding polar angle ranges of the grids are all 0.625°. In the counterclockwise direction, a polar angle range corresponding to the first grid is 0° to 0.625°, and a polar angle range corresponding to the second grid is 0.625° to 1.25°. By analogy, corresponding angles of other grids may be obtained.

The embodiments of the drivable area detection method of the disclosure will be described below.

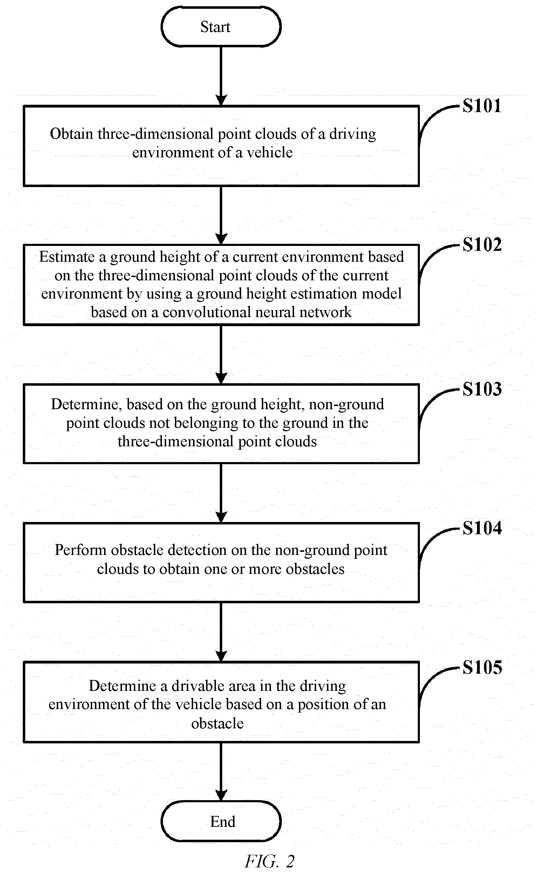

FIG. 2 is a schematic flowchart of main steps of a drivable area detection method according to an embodiment of the disclosure. As shown in FIG. 2, the drivable area detection method in this embodiment of the disclosure mainly includes the following step S 101 to step S105.

In step S101, three-dimensional point clouds of a driving environment of a vehicle are obtained.

The three-dimensional point cloud refers to three-dimensional data determined based on an echo signal reflected back to a vehicle after an environmental point in a driving environment of the vehicle receives an electromagnetic wave sent to the point by the vehicle. The three-dimensional data includes coordinates of the environment point in the three-dimensional coordinate system. In this embodiment of the disclosure, the vehicle may send an electromagnetic wave to the environmental point in the driving environment through a radar (Radar) or the like. The radar includes but is not limited to a millimeter-wave radar (Millimeter-wave Radar) and a laser radar (Laser Radar). In a preferred implementation, the radar may be a laser radar.

In step S102, a ground height of the current environment is estimated based on the three-dimensional point clouds of the current environment by using a ground height estimation model based on a convolutional neural network.

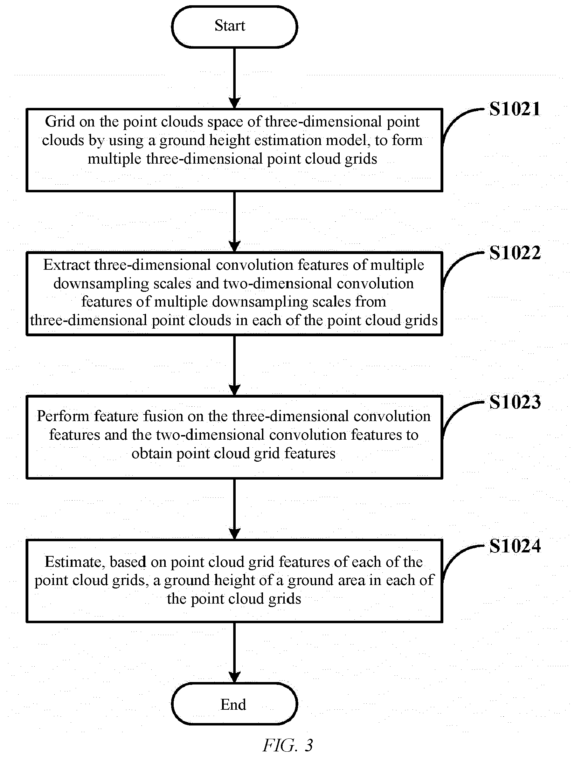

Referring to FIG. 3, in this embodiment of the disclosure, the ground height of the current environment may be estimated through the following step S 1021 to step S1024.

In step S 1021, griding on the point clouds space of the three-dimensional point clouds by using the ground height estimation model, to form multiple three-dimensional point cloud grids.

The point cloud space refers to a three-dimensional space formed by the point cloud coordinate system of the three-dimensional point cloud. The point cloud space is divided according to the three dimensions of x, y, and z axes in the point cloud coordinate system, to form multiple three-dimensional point cloud grids, and a point cloud grid is a volume pixel (Volume Pixel) in the point cloud space.

In step S 1022, three-dimensional convolution features of multiple downsampling scales and two-dimensional convolution features of multiple downsampling scales are extracted from a three-dimensional point cloud in each of the point cloud grids.

In this embodiment, three-dimensional convolutions of multiple different downsampling scales may be used to perform a convolution operation on the three-dimensional point cloud to obtain three-dimensional convolution features of multiple downsampling scales. Besides, two-dimensional convolutions of multiple different downsampling scales may be used to perform a convolution operation on the three-dimensional point cloud to obtain two-dimensional convolution features of multiple downsampling scales. For example, in some implementations, three-dimensional convolution features of 2x, 4x, and 8x downsampling scales may be obtained, and two-dimensional convolution features of 8x, 16x, and 32x downsampling scales may be obtained.

Further, in some implementations, after the convolution operation is performed on the three-dimensional point cloud in each of the point cloud grids by using three-dimensional convolutions of multiple downsampling scales, to obtain the three-dimensional convolution features of the multiple downsampling scales of each of the point cloud grids, the three-dimensional convolution features may be converted into initial two-dimensional convolution features, and a convolution operation may be performed on each of the initial two-dimensional convolution features by using two-dimensional convolutions of multiple downsampling scales, to obtain the final two-dimensional convolution features of the multiple downsampling scales of each of the point cloud grids.

A feature tensor of the three-dimensional convolution feature is four-dimensional and may be expressed as X*Y*Z*C, where C represents a feature length or the number of channels. A feature tensor of the two-dimensional convolution feature is three-dimensional and may be expressed as X*Y*C, where C represents a feature length or the number of channels. In converting the three-dimensional convolution feature into the initial two-dimensional convolution feature, the Z-dimensional feature and the C-dimensional feature in the three-dimensional convolution feature may be spliced to form a new feature tensor X*Y*(Z*C). In this way, the initial two-dimensional convolution feature may be obtained.

In step S 1023, feature fusion is performed on the three-dimensional convolution features and the two-dimensional convolution features to obtain point cloud grid features.

In some implementations, the following step 11 to step 13 may be performed to perform feature fusion on the three-dimensional convolution feature and the two-dimensional convolution feature to obtain the point cloud grid features.

In step 11, all the three-dimensional convolution features of each downsampling scale are converted into three-dimensional convolution features of a preset sampling scale, a convolution operation is performed on each of the three-dimensional convolution features of the preset sampling scale by using a convolution kernel with a size of 1×1×1, addition and densification processing is performed on three-dimensional convolution features resulting from the convolution operation, to form new three-dimensional convolution features, and the new three-dimensional convolution features are converted into first two-dimensional convolution features.

A convolution operation is performed on each of the three-dimensional convolution features of the preset sampling scale by using a convolution kernel with a size of 1×1×1, so that numbers of channels of all three-dimensional convolution features are the same.

In some implementations, after the three-dimensional convolution features of 2x, 4x, and 8x downsampling scales are obtained, all these three-dimensional convolution features may be converted into three-dimensional convolution features of the 4x downsampling scale. Specifically, the three-dimensional convolution feature of the 4x downsampling scale remains unchanged, the three-dimensional convolution feature of the 2x downsampling scale is downsampled again based on the 2x sampling scale to obtain a three-dimensional convolution feature of the 4x downsampling scale, and the three-dimensional convolution feature of the 8x downsampling scale is upsampled again based on the 2x sampling scale to obtain a three-dimensional convolution feature of the 4x downsampling scale. A convolution operation is performed on three three-dimensional convolution features of the 4x downsampling scale by using a convolution kernel with a size of 1×1×1, so that numbers of channels of the three three-dimensional convolution features are the same. Finally, addition and densification processing is performed on the three three-dimensional convolution features to obtain a new three-dimensional convolution feature.

It should be noted that in this embodiment, a conventional convolution feature addition and densification method in the technical field of convolution may be used to perform addition and densification processing on the three three-dimensional convolution features. This is not specifically described in this embodiment of the disclosure.

In step 12, all the two-dimensional convolution features of each downsampling scale are converted into two-dimensional convolution features of the preset sampling scale, a convolution operation is performed on each of the two-dimensional convolution features of the preset sampling scale by using a convolution kernel with a size of 1×1, and addition and densification processing is performed on two-dimensional convolution features resulting from the convolution operation, to form second two-dimensional convolution features.

A convolution operation is performed on each of the two-dimensional convolution features of the preset sampling scale by using a convolution kernel with a size of 1×1, so that numbers of channels of all the two-dimensional convolution features are the same.

In some implementations, after the two-dimensional convolution features of 8x, 16x, and 32x downsampling scales are obtained, all these two-dimensional convolution features may be converted into two-dimensional convolution features of the 4x downsampling scale. Specifically, the two-dimensional convolution feature of the 8x downsampling scale is upsampled again based on the 2x sampling scale to obtain a two-dimensional convolution feature of the 4x downsampling scale, the two-dimensional convolution feature of the 16x downsampling scale is upsampled again based on the 4x sampling scale to obtain a two-dimensional convolution feature of the 4x downsampling scale, and the two-dimensional convolution feature of the 32x downsampling scale is upsampled again based on the 8x sampling scale to obtain a two-dimensional convolution feature of the 4x downsampling scale. A convolution operation is performed on three two-dimensional convolution features of the 4x downsampling scale by using a convolution kernel with a size of 1×1, so that numbers of channels of the three two-dimensional convolution features are the same. Finally, addition and densification processing is performed on the three two-dimensional convolution features to obtain a new two-dimensional convolution feature.

It should be noted that in this embodiment, a conventional convolution feature addition and densification method in the technical field of convolution may be used to perform addition and densification processing on the three two-dimensional convolution features. This is not specifically described in this embodiment of the disclosure.

In step 13, a convolution operation is performed on the first two-dimensional convolution features and the second two-dimensional convolution features by using a convolution kernel with a size of 1×1, and first two-dimensional convolution features and second two-dimensional convolution features resulting from the convolution operation are added, to obtain the point cloud grid features.

The convolution operation is performed on the first two-dimensional convolution features and the second two-dimensional convolution features by using the convolution kernel with a size of 1×1, so that numbers of channels of the first two-dimensional convolution features and the second two-dimensional convolution features can be the same.

It should be noted that in this embodiment, a conventional convolution feature addition method in the technical field of convolution may be used to add the first two-dimensional convolution feature and the second two-dimensional convolution feature. This is not specifically limited in this embodiment of the disclosure.

In step S 1024, a ground height of a ground area in each of the point cloud grids is estimated based on point cloud grid features of each of the point cloud grids.

The three-dimensional convolution features and the two-dimensional convolution features of multiple downsampling scales are extracted from the three-dimensional point cloud and feature fusion is performed to form point cloud grid features, and then the ground height is estimated based on the point cloud grid features. Therefore, this can be applied to different geomorphological environments, and in each type of geomorphological environment, effective ground features can be extracted by extracting features of multiple downsampling scales. In this way, the ground height can be accurately estimated.

The above is the specific description of step S 102, and step S 103 to step S105 will be described below.

In step S103, non-ground point clouds not belonging to the ground in the three-dimensional point clouds are determined based on the ground height.

A coordinate of the z-axis in the point cloud coordinate system represents a point cloud height of the three-dimensional point cloud. By comparing the ground height with the point cloud height, three-dimensional point clouds that are ground point clouds belonging to the ground and three-dimensional point clouds that are non-ground point clouds not belonging to the ground may be distinguished. Specifically, if the point cloud height is less than or equal to the ground height, the three-dimensional point cloud is a ground point cloud. If the point cloud height is greater than the ground height, the three-dimensional point cloud is a non-ground point cloud.

In step S104, obstacle detection is performed on the non-ground point clouds to obtain one or more obstacles.

In this embodiment, non-ground point clouds may be clustered based on a point cloud spacing between three-dimensional point clouds to obtain one or more point cloud clusters, and each point cloud cluster represents an obstacle. Information of an obstacle such as a position, a shape, and a height may be determined based on coordinates of the point cloud in the point cloud cluster.

It should be noted that in this embodiment, a conventional method in the field of obstacle detection technologies may be used to obtain information of each obstacle such as a position, a shape, and a height by using coordinates of the point cloud in the point cloud cluster. This is not specifically limited in this embodiment of the disclosure.

In step S 105, a drivable area in the driving environment of the vehicle is determinied based on a position of an obstacle.

After the position of the obstacle is determined, the drivable area in the driving environment of the vehicle may be determined based on the distance between the vehicle and the obstacle. For example, if the distance between the vehicle and the obstacle is 10 meters, the drivable area may be an area within 10 meters from the vehicle.

Based on the method described in step S101 to step S105, the non-ground point clouds can be quickly and accurately selected from a large number of three-dimensional point clouds, thereby improving the efficiency and accuracy of determining the drivable area by using the non-ground point cloud.

Step S103 and step S105 will be further described below.

In some implementations of step S103, to avoid interference to the ground height caused by factors such as inaccurate collection of the three-dimensional point clouds, the ground height may be compensated first, and then the non-ground point clouds may be determined based on the compensated ground height. Specifically, in this implementation, the following step S1031 to step S1033 may be used to determine the non-ground point clouds not belonging to the ground in the three-dimensional point clouds.

Step S 1031: a ground height of a ground area in a point cloud grid to which a current three-dimensional point cloud belongs is determined.

In this embodiment, when griding on the point cloud space of the three-dimensional point clouds to form multiple three-dimensional point cloud grids, a grid index may be set for each three-dimensional point cloud, and the grid index may be queried to determine a point cloud grid to which the three-dimensional point cloud belongs.

After a point cloud grid to which the three-dimensional point cloud belongs is determined, x-axis and y-axis coordinates of the point cloud grid in the point cloud coordinate system are obtained, and a plane area determined by the x-axis and y-axis coordinates is a ground area in which the point cloud grid is located.

In step S1032, a preset compensation amount is added to the ground height to form a new ground height.

Those skilled in the art can flexibly set a specific value of the preset compensation amount according to actual needs, and in some preferred implementations, the preset compensation amount can be set to a value greater than zero.

In step S1033, whether a point cloud height of the current three-dimensional point cloud is less than the new ground height is determined; and if the point cloud height of the current three-dimensional point cloud is less than the new ground height, the current three-dimensional point cloud is determined as a ground point cloud belonging to the ground; or if the point cloud height of the current three-dimensional point cloud is not less than the new ground height, the current three-dimensional point cloud is determined as a non-ground point cloud that does not belong to the ground.

Through step S 1031 to step S 1033, ground point clouds and non-ground point clouds in the three-dimensional point clouds can be accurately selected.

The above is a further description of step S 103, and step S 105 will be further described below.

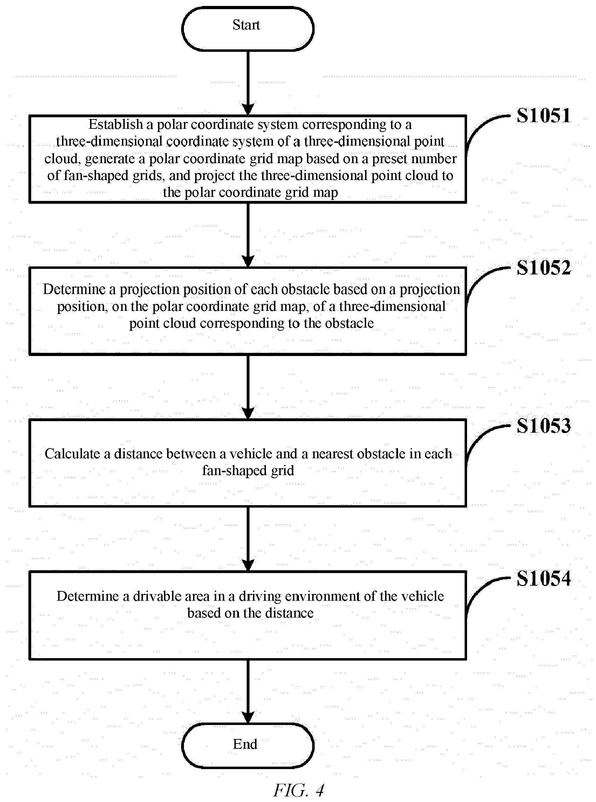

In some implementations of step S105, as shown in FIG. 4, to accurately determine the drivable area in the driving environment of the vehicle, the following steps S1051 to S1054 may be used to determine the drivable area in the driving environment of the vehicle.

In step S1051, a polar coordinate system corresponding to a three-dimensional coordinate system of the three-dimensional point cloud is established, a polar coordinate grid map is generated based on a preset number of fan-shaped grids, and the three-dimensional point cloud is projected to the polar coordinate grid map.

A polar coordinate system established with the origin of the three-dimensional coordinate system as the pole is a polar coordinate system corresponding to the three-dimensional coordinate system.

After the three-dimensional point cloud is projected to the polar coordinate grid map, coordinates of projected points of each three-dimensional point cloud in the polar coordinate grid map may be obtained according to a coordinate transformation relationship between the polar coordinate system and the three-dimensional coordinate system, and projected points falling into each grid may be obtained based on coordinates of the projected points and position information of each grid.

In step S1052, a projection position of each obstacle is determined based on a projection position, on the polar coordinate grid map, of a three-dimensional point cloud corresponding to the obstacle.

According to positions of projected points corresponding to the three-dimensional point cloud, projection positions of the three-dimensional point cloud on the polar coordinate grid map may be obtained, and the projection position of the obstacle may be determined based on projection positions of all three-dimensional point clouds included in the obstacle.

In step S1053, a distance between the vehicle and a nearest obstacle in each fan-shaped grid is calculated.

In step S 1054, the drivable area in the driving environment of the vehicle is determined based on the distance.

Specifically, an area within the distance with the vehicle as a start point is used as the drivable area.

The above is a further description of step S 105.

A model training method of the ground height estimation model in this embodiment of the disclosure will be described below.

In this embodiment of the disclosure, the ground height estimation model may be trained through the following step S201 to step S202, so that the trained ground height estimation model may be used to estimate the ground height of the current environment in step S102.

In step S201, three-dimensional point cloud training samples are inputted into the ground height estimation model, to obtain training sample point cloud grid features extracted from the three-dimensional point cloud training samples by the ground height estimation model.

A method for obtaining the training sample point cloud grid feature is the same as the method described in step S 1021 to step S 1023 in the foregoing method embodiment, and will not be repeated herein.

In step S202, model training is performed, based on the training sample point cloud grid features, on each of the ground height estimation model and a preset model for point cloud processing based on the ground height, and model training is stopped when both the ground height estimation model and the preset model for point cloud processing based on the ground height meet a convergence condition.

The convergence condition includes but is not limited to: the number of iterations of model training reaches a preset number threshold, and a loss value of a loss function used for model training is less than a preset loss value threshold.

It should be noted that, in this embodiment, the ground height estimation model may be trained based on a conventional model training method by using a preset loss function. For example, the training samples are inputted into the ground height estimation model, a loss value of a loss function is calculated through forward propagation, a parameter gradient of a model parameter is calculated according to the loss value, and the model parameter is updated according to backpropagation of the parameter gradient, thus completing an iterative training.

The model training on the ground height estimation model can optimize feature extraction parameters of the ground height estimation model, and the model training on the point cloud processing model can also optimize the feature extraction parameters of the ground height estimation model. Finally, through the collaborative training on the ground height estimation model and the point cloud processing model, the feature extraction parameters of the ground height estimation model can be better optimized, thereby improving the accuracy of extracting point cloud grid features by the ground height estimation model, obtaining accurate point cloud grid features, and further improving the accuracy of determining ground point clouds and non-ground point clouds.

In this embodiment of the disclosure, a conventional model for point cloud processing based on the ground height in the technical field of point cloud processing may be selected to perform collaborative training on the ground height estimation model. In some implementations, the preset model for point cloud processing based on the ground height includes at least a ground point cloud segmentation model and/or an object detection model for object detection on a three-dimensional point cloud.

The following describes the loss function used in the model training of the ground height estimation model.

When the preset model for point cloud processing based on ground height includes the ground point cloud segmentation model, model training may be performed on the ground height estimation model based on the training sample point cloud grid features by using all the quadratic loss function, the smooth loss function, and the height consistency loss function. In addition, when the preset model for point cloud processing based on ground height includes both the ground point cloud segmentation model and the object detection model for object detection on a three-dimensional point cloud, model training may also be performed on the ground height estimation model based on the training sample point cloud grid features by using all the quadratic loss function, the smooth loss function, and the height consistency loss function.

When the preset model for point cloud processing based on ground height includes the object detection model for object detection on a three-dimensional point cloud, but does not include the ground point cloud segmentation model, model training may be performed on the ground height estimation model based on the training sample point cloud grid features by using both the quadratic loss function and the smooth loss function.

The quadratic loss function, the smooth loss function, and the height consistency loss function are described below.

### 1. Quadratic loss function

The quadratic loss function is a loss function that uses, as a loss value, a Euclidean distance (Euclidean Distance) between a first ground height annotation value of a three-dimensional point cloud training sample and an estimated ground height value outputted by the ground height estimation model. A smaller Euclidean distance between the first ground height annotation value and the estimated ground height value indicates that the estimated ground height value is closer to the first ground height annotation value and the estimated ground height value is more accurate.

The first ground height annotation value is a ground height annotation value in a sample label used for model training performed on the ground height estimation model by using three-dimensional point cloud training samples.

To improve the annotation efficiency in this embodiment of the disclosure, an information annotation tool such as Patchwork may be used to automatically annotate ground height annotation values of a large number of three-dimensional point cloud training samples.

### 2. Smooth loss function

The smooth loss function is a loss function that uses, as a loss value, a difference between estimated ground height values that are of adjacent three-dimensional point cloud training samples and that are outputted by the ground height estimation model.

A smaller difference between estimated ground height values of adjacent three-dimensional point cloud training samples indicates that an estimated ground height value outputted by the ground height estimation model is smoother and closer to a real ground height.

### 3. Height consistency loss function

The height consistency loss function is a loss function that uses, as a loss value, a Manhattan distance (Manhattan Distance) between a second ground height annotation value of a three-dimensional point cloud training sample and an estimated ground height value outputted by the ground height estimation model. A smaller Manhattan distance between the second ground height annotation value and the estimated ground height value indicates that the estimated ground height value is closer to the second ground height annotation value and the estimated ground height value is more accurate.

The second ground height annotation value is a ground height annotation value in a sample label used for model training performed on the ground point cloud segmentation model by using three-dimensional point cloud training samples.

In this embodiment, the second ground height annotation value may be obtained in the following manner:
First, an image ground segmentation model for ground segmentation on a two-dimensional image is used to perform ground segmentation on a two-dimensional image to obtain multiple two-dimensional ground points. Then, based on a coordinate transformation relationship between the two-dimensional image and the three-dimensional point cloud, each two-dimensional ground point is transformed into the point cloud coordinate system of the three-dimensional point cloud to obtain a corresponding ground point cloud. Finally, a z-axis coordinate of the ground point cloud in the point cloud coordinate system is used as the second ground height annotation value of the ground point cloud.

The above is a specific description of the model training method of the ground height estimation model.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by at least one processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a computer device. In an embodiment of a computer device according to the disclosure, the computer device includes at least one processor and a storage apparatus. The storage apparatus may be configured to store a program for executing the drivable area detection method of the above method embodiments. The processor may be configured to execute the program in the storage apparatus, where the program includes but is not limited to a program for executing the drivable area detection method of the above method embodiments. For ease of description, only parts related to the embodiments of the disclosure are shown. For specific technical details that are not disclosed, reference may be made to the method part of the embodiments of the disclosure. The computer device may be a device including various electronic devices.

Further, the disclosure further provides a non-transitory computer-readable storage medium. In an embodiment of a non-transitory computer-readable storage medium according to the disclosure, the computer-readable storage medium may be configured to store a program for executing the drivable area detection method of the above method embodiments, where the program may be loaded and executed by the at least one processor to implement the above drivable area detection method. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a vehicle. In an embodiment of a vehicle according to the disclosure, the vehicle may include the computer device described in the above computer device embodiment. In this embodiment, the vehicle may be an automatic driving vehicle, an unmanned vehicle, or the like. In addition, according to types of power sources, the vehicle in this embodiment can be a fuel vehicle, an electric vehicle, a hybrid vehicle using both electric energy and fuel, or a vehicle using other new energy sources.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A drivable area detection method, **characterized by** comprising:
obtaining three-dimensional point clouds of a driving environment of a vehicle;
estimating a ground height of the current environment based on the three-dimensional point clouds of the current environment by using a ground height estimation model based on a convolutional neural network;
determining, based on the ground height, non-ground point clouds not belonging to the ground in the three-dimensional point clouds;
performing obstacle detection on the non-ground point clouds to obtain one or more obstacles; and
determining a drivable area in the driving environment of the vehicle based on the position of the obstacles,
wherein the estimating a ground height of the current environment based on the three-dimensional point clouds of the current environment by using a ground height estimation model based on a convolutional neural network comprises at least the following steps:
griding the point clouds space of the three-dimensional point clouds by using the ground height estimation model, to form multiple three-dimensional point cloud grids, extracting three-dimensional convolution features of multiple downsampling scales and two-dimensional convolution features of multiple downsampling scales from three-dimensional point clouds in each of the point cloud grids, performing feature fusion on the three-dimensional convolution features and the two-dimensional convolution features to obtain point cloud grid features, and estimating, based on point cloud grid features of each of the point cloud grids, a ground height of a ground area in each of the point cloud grids.

2. The drivable area detection method according to claim 1, wherein the step of "extracting three-dimensional convolution features of multiple downsampling scales and two-dimensional convolution features of multiple downsampling scales from a three-dimensional point cloud in each of the point cloud grids" specifically comprises:
performing a convolution operation on the three-dimensional point clouds in each of the point cloud grids by using three-dimensional convolutions of multiple downsampling scales, to obtain the three-dimensional convolution features of the multiple downsampling scales of each of the point cloud grids; and
converting the three-dimensional convolution features into initial two-dimensional convolution features, and performing a convolution operation on each of the initial two-dimensional convolution features by using two-dimensional convolutions of multiple downsampling scales, to obtain the final two-dimensional convolution features of the multiple downsampling scales of each of the point cloud grids.

3. The drivable area detection method according to claim 1 or 2, wherein the step of "performing feature fusion on the three-dimensional convolution features and the two-dimensional convolution features to obtain point cloud grid features" specifically comprises:
converting all the three-dimensional convolution features of each downsampling scale into three-dimensional convolution features of a preset sampling scale, performing a convolution operation on each of the three-dimensional convolution features of the preset sampling scale by using a convolution kernel with a size of 1×1×1, performing addition and densification processing on three-dimensional convolution features resulting from the convolution operation, to form new three-dimensional convolution features, and converting the new three-dimensional convolution features into first two-dimensional convolution features;
converting all the two-dimensional convolution features of each downsampling scale into two-dimensional convolution features of the preset sampling scale, performing a convolution operation on each of the two-dimensional convolution features of the preset sampling scale by using a convolution kernel with a size of 1×1, and performing addition and densification processing on two-dimensional convolution features resulting from the convolution operation, to form second two-dimensional convolution features; and
performing a convolution operation on the first two-dimensional convolution features and the second two-dimensional convolution features by using a convolution kernel with a size of 1×1, and adding first two-dimensional convolution features and second two-dimensional convolution features resulting from the convolution operation, to obtain the point cloud grid features.

4. The drivable area detection method according to any one of claims 1 to 3, wherein the method further comprises: performing model training on the ground height estimation model in the following manner, so as to estimate the ground height of the current environment by using the trained ground height estimation model:
inputting three-dimensional point cloud training samples into the ground height estimation model, to obtain training sample point cloud grid features extracted from the three-dimensional point cloud training samples by the ground height estimation model; and
performing, based on the training sample point cloud grid features, model training on each of the ground height estimation model and a preset model for point cloud processing based on the ground height, and stopping model training when both the ground height estimation model and the preset model for point cloud processing based on the ground height meet a convergence condition.

5. The drivable area detection method according to claim 4, wherein the preset model for point cloud processing based on the ground height comprises at least a ground point cloud segmentation model and/or an object detection model for object detection on a three-dimensional point cloud, and the method further comprises: performing model training on the ground height estimation model based on the training sample point cloud grid features through the following steps:
performing model training on the ground height estimation model based on the training sample point cloud grid features by using a quadratic loss function, a smooth loss function, and a height consistency loss function,
wherein the quadratic loss function is a loss function that uses, as a loss value, a Euclidean distance between a first ground height annotation value of a three-dimensional point cloud training sample and an estimated ground height value outputted by the ground height estimation model; the first ground height annotation value is a ground height annotation value in a sample label used for model training performed on the ground height estimation model by using three-dimensional point cloud training samples;
the smooth loss function is a loss function that uses, as a loss value, a difference between estimated ground height values that are of adjacent three-dimensional point cloud training samples and that are outputted by the ground height estimation model;
the height consistency loss function is a loss function that uses, as a loss value, a Manhattan distance between a second ground height annotation value of a three-dimensional point cloud training sample and an estimated ground height value outputted by the ground height estimation model; and the second ground height annotation value is a ground height annotation value in a sample label used for model training performed on the ground point cloud segmentation model by using three-dimensional point cloud training samples.

6. The drivable area detection method according to any of claims 1 to 5, wherein the step of "determining, based on the ground height, non-ground point clouds not belonging to the ground in the three-dimensional point clouds" specifically comprises:
determining a ground height of a ground area in a point cloud grid to which a current three-dimensional point cloud belongs;
adding a preset compensation amount to the ground height to form a new ground height;
determining whether a point cloud height of the current three-dimensional point cloud is less than the new ground height; and
if the point cloud height of the current three-dimensional point cloud is less than the new ground height, determining the current three-dimensional point cloud as a ground point cloud belonging to the ground; or
if the point cloud height of the current three-dimensional point cloud is not less than the new ground height, determining the current three-dimensional point cloud as a non-ground point cloud that does not belong to the ground.

7. The drivable area detection method according to any of claims 1 to 6, wherein the step of "determining a drivable area in the driving environment of the vehicle based on the position of the obstacles" specifically comprises:
establishing a polar coordinate system corresponding to a three-dimensional coordinate system of the three-dimensional point cloud, generating a polar coordinate grid map based on a preset number of fan-shaped grids, and projecting the three-dimensional point cloud to the polar coordinate grid map;
determining a projection position of each obstacle based on a projection position, on the polar coordinate grid map, of a three-dimensional point cloud corresponding to the obstacle;
calculating a distance between the vehicle and a nearest obstacle in each fan-shaped grid; and
determining, based on the distance, the drivable area in the driving environment of the vehicle.

8. A computer device, comprising at least one processor and a storage apparatus configured to store multiple program codes, wherein the program codes are adapted to be loaded and executed by the at least one processor to perform a drivable area detection method according to any one of claims 1 to 7.

9. A non-transitory computer-readable storage medium having a plurality of program codes stored thereon that, when executed by at least one processor, cause the at least one processor to execute a drivable area detection method according to any one of claims 1 to 7.

10. A vehicle, comprising the computer device according to claim 8.
